# NEW EUROPEAN PATENT SPECIFICATION

(11) **EP 0 132 565 B2**
(45) Date of publication and mention of the opposition decision: **25.11.1998**
(45) Mention of the grant of the patent: 20.09.1989
(21) Application number: 84106652.5
(22) Date of filing: 12.06.1984
(51) Int. Cl.: B32B 27/08

(54) **Oriented film laminates of polyamides and ethylene vinyl alcohol**
Orientierte geschichtete Filme aus Polyamiden und Äthylen-Vinylalkoholmischpolymerisaten
Films orientés laminés de polyamides et de copolymères d'éthylène et d'alcool vinylique

(30) Priority: 01.08.1983 US 518983
(43) Date of publication of application: 13.02.1985
(73) Proprietor: AlliedSignal Inc., Morristown, New Jersey 07962-2245 (US)
(72) Inventor: DeAntonis, Ferdinand Anthony, Fogelsville Pennsylvania 18501 (US); Murell, William Henry, Orwigsburg Pennsylvania 17961 (US); Degrassi, Alfieri, Pottsville Pennsylvania 17901 (US)
(74) Representative: Lawrence, Peter Robin Broughton

(56) References cited:
- EP-A- 0 063 006
- DE-A- 3 229 158
- GB-A- 1 522 397
- JP-A-52 115 880
- JP-A-57 159 622
- US-A- 3 595 740
- US-A- 3 949 114
- US-A- 4 254 169
- US-A- 4 294 935
- Proceedings of the Second Annual International Conference on Coextrusion Markets and Technology, COEX '82, November 3-5, 1982, Princeton, New Jersey

## Description

The present invention is in the field of film laminates; more particularly, the invention relates to the use of oriented film laminates of polyamides and ethylene vinyl alcohol copolymers.

Laminates containing at least one layer of ethylene vinyl alcohol copolymer and at least one polyamide, usually polyepsiloncaprolactam, layers of ethylene vinyl alcohol are disclosed in US―A― 3595740, -3949114, -4254169 and -4284678. The ethylene vinyl alcohol copolymer layer provides a barrier to oxygen permeability. Polyamides are used for physical property improvement, chemical resistance, and acts as a barrier to gas permeability.

US―A―4294935 discloses that a film of ethylene vinyl alcohol copolymer has improved gas barrier characteristics when expanded to an area 4 to 20 times the original area.

EP―A―0063006 discloses composite films comprising a plasticized ethylene vinyl alcohol copolymer, the plasticizer being an aromatic sulfonamide, polyethyl oxazoline, polyvinyl pyrrolidone, polyvinyl formaldehyde or a polyamide. These can be formed into laminated structures with various film-forming resins, such as polyamides, partially hydrolyzed ethylene vinyl acetate copolymer adhesives or anhydride modified polyolefin adhesives. These laminates are stated to have excellent oxygen barrier properties and can be partially stretched, for instance to wrap a food item, without developing pinholes, cracks etc.

GB―A―1522397 discloses heat shrinkable laminate film having low oxygen permeability comprising a hydrolyzed ethylene vinyl acetate copolymer disposed between two other polymeric layers, at least one of which is crosslinked. The laminate is heated to the orientation temperature of the crosslinked polymer and stretched. The polymeric layers are preferably polyethylene or an ethylene-vinyl acetate copolymer. Other polymer layers. e.g. of polyamides, may be present, but are not specifically discussed. The stretching is indicated to be at least 10% in one direction in order to provide useful heat shrinking capabilities.

The present invention provides use as an oxygen barrier of a film laminate comprising a polyamide layer, preferably polyepsiloncaprolactam, and a layer of ethylene vinyl alcohol copolymer. According to the invention, the laminate is expanded to an area of up to 4 times its original area by monoaxially drawing it to a draw ratio of from 1.5:1 to 4:1. Preferably, the polyamide and the ethylene vinyl alcohol layers are adjacent 10 one another. Preferred laminates have outer layers of polyepsiloncaprolactam and at least one inner layer of ethylene vinyl alcohol copolymer adjacent to at least one layer of polyepsiloncaprolactam. Preferably, the laminate is a multilayer coextrusion.

The degree of orientation or drawing of the film laminate is characterised by the draw ratio. For the purposes of the present invention the term draw ratio is an indication of the increase in the dimension in the direction of draw. Therefore the film laminate having a draw ratio of 2:1 has its length doubled during the drawing or orientation process. In the present invention the film laminate is monoaxially drawn to a draw ratio of from 1.5:1 to 4:1. The film laminate increases in area upon being drawn. The expansion of area is an indication of how much the film has been stretched. The film laminate of the present invention can be stretched so that the area of the film has expanded to an area up to 4 times the original area. This results in dramatic improvements in barrier properties, as indicated by the examples.

As discussed below the film laminate can be formed by various processes including coextrusion and extrusion lamination. The preferred film laminate is formed by coextrusion.

The preferred structure of the film laminate of the present invention is one in which there is at least one layer of ethylene vinyl alcohol copolymer adjacent to at least one layer of polyamide, preferably polyepsiloncaprolactam. Structures which are particularly preferred are balanced or symmetrical structures to prevent curling of the film. Such structures include at least one core layer of ethylene vinyl alcohol copolymer sandwiched between outer layers of polyamide. Other laminates include an outer layer of polyepsiloncaprolactam adjacent to a first inner layer of ethylene vinyl alcohol copolymer, the opposite side of which is adjacent to a polyepsiloncaprolactam layer which is adjacent to a second layer of ethylene vinyl alcohol copolymer, the opposite of which is adjacent to an outer layer of polyepsiloncaprolactam. The laminates can include other polymeric film layers, and adhesives.

Polyamides suitable for use in the present invention include polyamides which are film forming. Preferred polyamides are long chain polymeric amides having recurring amide groups as part of the polymer backbone and preferably a relative formic acid viscosity of from 40 to 250 measured in 90 percent formic acid at a concentration of 9.2 weight percent.

Non-limiting examples of such polyamides are:
a) those prepared by the polymerization of lactams, preferably epsilon-caprolactam (nylon 6):
b) those prepared by the condensation of a diamine with a dibasic acid, preferably the condensation of hexamethylene diamine with adipic acid (nylon 6,6) and the condensation of hexamethylene diamine with sebacic acid (nylon 6,10);
c) those prepared by self-condensation of amino acids, preferably self-condensation of 11-amino-undecanoic acid (nylon 11); and
d) those based on polymerized vegetable oil acids, or random, block, or graph interpolymers consisting of two or more of these polyamides. Preferred polyamides are polyepsiloncaprolactam. polyhexymethylene adipamide, and a copolymer of polyepsiloncaprolactam and polyhexamethylene adipamide.

Also suitable for use herein are polyamide interpolymers comprised of a polyamide and one or more comonomers. Non limiting examples of such comonomers include acrylic or methacrylic acid and/or their derivatives, such as acrylonitrile, acrylamide, methyls, ethyls, propyl, butyl, 2-ethylhexyl, dexyl and tridecylesters of acrylic or methyacrylic acid, vinyl esters such as vinyl acetate and vinyl propionate, vinyl aromatic compounds such as styrene, alpha-methyl styrene, and vinyl toluenes and vinyl ethers such as vinyl isobutyl ether.

It is further noted that the aforementioned polyamides containing various terminal functionality are also suitable for use in the present invention. Preferred are polycaprolactams (nylon 6) containing a) chain, b) a carboxyl group attached to one end and an acetamide group attached to the other end of the polymer chain, c) an amino group attached to both ends of the polymer chain and d) a carboxyl group attached to one end and an amino group attached to the other end of the polymer chain. Particularly preferred is d) above, a polycaprolactam having a carboxyl group attached to one end and an amino group attached to the other end of the polymer chain.

The nylon of the present invention may be modified by one or more conventional additives such as stabilizers and inhibitors or oxidative, thermal, and ultraviolet light degradation; lubricants, plasticizers and mold release agents including dyes from pigments.

Copolymers of ethylene and vinyl alcohol suitable for use in the present invention can be prepared by the methods disclosed in US―A―3510464, -3560461, -3847845 and -3585177.

The ethylene vinyl alcohol copolymer can be hydrolyzed ethylene vinyl acetate copolymer. The degree of hydrolysis can range from 85 to 99.5%. The ethylene vinyl alcohol copolymer preferably contains from 15 to 65 mol percent ethylene and more preferably 25 to 50 mol percent ethylene. Copolymers of lower than 15 mol percent ethylene tend to be difficult to extrude while those above 65 mol percent ethylene have reduced oxygen barrier performance, see US―A―3595740.

Useful ethylene vinyl alcohol copolymers suitable for the present invention are commercially available from Kuraray of Japan. Kuraray of Japan produces an ethylene vinyl alcohol copolymer under the designation "EP-E" which has 32 to 36% ethylene, a number of average molecular weight of about 29,500 and melting point of 162°C (324°F). Other manufacturers produce suitable ethylene vinyl alcohol copolymers. One suitable copolymer has about 29% ethylene, a number of average molecular weight of about number average 22.000 and a melting point of 180°C (356°F). Another described in US―A―4252169 has 40% ethylene, a number average molecular weight of about 26,000 and a melting point of 164°C (327°F). The number average molecular weight can be measured by osmometry,

In addition to having at least one layer of polyamide adjacent to at least one layer of ethylene vinyl alcohol copolymer the film laminate of the present invention can include laminates and other polymeric film layers. Included in the other polymer film layers are polyolefins and polyolefin copolymers including ionic copolymers. Adhesive layers include modified polyolefins. Non-limiting examples of other polymeric layers and adhesives which can be used in the film laminate of the present invention are disclosed in US―A―4058647 and -4254169.

The film used in the present invention can also include an expanded film made of a blend of polyamide and ethylene vinyl alcohol copolymer, included as a layer in the film laminate. The laminate can include a layer of the blend and a layer of polyamides and a layer of ethylene vinyl alcohol copolymer. The blend can comprise from 1 to 99 and preferably 40 to 90 percent by weight of the polymers of polyamide. The blend of the polyamide and ethylene vinyl alcohol copolymer can be interposed between layers of polyamide and ethylene vinyl alcohol copolymer. It is recognized that the blend can include other compatible polymers.

In a preferred method for improving the barrier properties of the film laminate at least one layer of polyamide is laminated adjacent to at least one layer of ethylene vinyl alcohol copolymer and the laminate is then monoaxially oriented. The film laminate can be formed by suitable laminating techniques including extrusion lamination and coextrusion. In the most preferred method the laminating is conducted by coextrusion. Processes of coextrusion to form film and sheet laminates are generally known as indicated in, "Modern Plastics Encyclopedia", Vol. 56, No. 10A, pp. 131―132, McGraw Hill, October, 1979. Coextruded sheet and film are made using multimanifold dies such as a multi-manifold circular die for bubble blown film or coextrusion feed block combined with a flat die for cast film. The article "Trends & Equipment...Co-extrusion" by M. H. Naitove in Plastics Technology, February, 1977, pp. 61―71, discusses co-extrusion in further detail.

As indicated above it is preferred to orient the film laminate after forming the laminate. The film laminate used in the present invention has been found to be able to be oriented without delaminating or fibrillating. The orientation can be conducted by methods known in the art. Generally, monoaxially oriented film is prepared by passing the film over a series of preheating and heating rolls. The heated film laminate moves through a set of nip rolls downstream at a faster rate than the film entering the nip rolls at an upstream location. The change of rate is compensated for by stretching in the film laminate. Typical process and range of conditions for monoaxially oriented polyamide film are disclosed in US―A―4362585. The film laminate used in the present invention can be embossed after orientation.

The film laminate used in the present invention having at least one polyamide layer and at least one layer of ethylene vinyl alcohol copolymer has improved gas particularly oxygen barrier properties contributed by the layers of polyamide and ethylene vinyl alcohol than would be expected from separate films of oriented polyamide and oriented ethylene vinyl alcohol copolymer.

Several examples are set forth below to illustrate the nature of the invention and the manner of carrying it out.

### Example

A co-extruded laminate was made from polyepsiloncaprolactam and ethylene vinyl alcohol. The polyepsiloncaprolactam polymer used had a relative formic acid viscosity of 73 measured in 90% formic acid and a 9.2% concentration by weight. The ethylene vinyl alcohol was Kuraray type "F" (Grade EP-F) produced by Kuraray of Japan. The ethylene vinyl alcohol was in pellet form and had a melt index of 1.5 g per 10 minutes as measured on the ASTM Test No. 1238 at a load of 2160 g at 190°C. The ethylene vinyl alcohol copolymer contains 67 mol percent vinyl alcohol and had a glass transition temperature of 69°C. The ethylene vinyl alcohol copolymer and the polyepsiloncaprolactam were co-extruded to form a co-extruded film laminate. The polyepsiloncaprolactam was extruded through a 6.35 cm (2½ inch) diameter Davis Standard Extruder having a temperature profile of Zone 1-232°C (450°F), zone 2-241°C (465°F), Zone 3―249°C (480°F), Zone 4―252°C (485°F), Zone 5―249°C (480°F) and adapter Zone 1-254°C (490°F). The extruder operated with a screw speed of 35 rpm, a motor drive 28 amps, a barrel pressure of 6895 kPa (1000 psig), the melt temperature of the nylon at 249°C (480°F), and an extruder output of 27.24 kg (60 pounds) per hour.

The ethylene vinyl alcohol copolymer was extruded through a 4.445 cm (1 3/4 inch) diameter-Reifenhauser Extruder. The extruder had a temperature profile which included Zone 1-149°C (300°F), Zone 2―232°C (450°F), Zone 3―232°C (450°F), Zone 4―229°C (445°F), and an adaptor zone 1―224°C (435°F). The operating conditions of the extruder included a screw speed of 30 rpm, a motor drive amperage of 8 amps, a melt temperature of 238°C (461°F), and an extruder output of 7.3 kg (16 pounds) per hour.

The extrudate from 3 extruders was led to a feed block coextrusion adaptor manufactured by the Johnson Plastic Corporation and operating at an adaptor temperature of Zone 1-249°C (480°F), and Zone 2―249°C (480°F). The flat cast die temperatures were operated at 249°C (480°F). The coextruder film was then cast on a roll at 91°C (195°F), followed by a cooling roll at 63°C (145°F), and an additional roll at 93°C (200°F). The total extrusion output was 34.5 kg (76 pounds) per hour.

The film was oriented monoaxially. The film was passed over a preheated roll at 94°C (202°F), to a slow stretch roll at 96°C (205°F), to a fast stretch roll at 116°C (240°F), to a heat set roll at 129°C (265°F), and finally to a cooling roll at 88°C (190°F). The line speed was 29m (95 feet) per minute and the draw ratio was 3.2:1.

The film laminate was tested for oxygen permeability using the Ox-Tran 10/50. The Ox-Tran 10/50 cell was manufactured by Modern Controls, Inc., Elk River, MN and operated at 24°C. The procedure used was that disclosed in ASTM D-3985. The oxygen permeability was measured in cubic centimeters per 645 cm³ [100 square inch) per 24 hours at 24°C. The oriented film had a gauge of 1.72x10⁻² mm (0.68 mils).

The oxygen permeation of the oriented film of the present invention was compared to the oxygen permeation for a film of the above-described polyepsiloncaprolactam which was coated with polyvinylidene chloride which is an oxygen barrier. This film had a total gauge of 2.16x10⁻² mm (.85 mils) with the polyvinylidene chloride having a gauge of 0.46x10⁻² mm (0.18 mils).

A second comparative was made using a film of polyepsiloncaprolactam of the type described above which was monaxially drawn to a draw ratio of 3.2:1. The oriented film was coated with polyvinylidene chloride as an oxygen barrier. The film had a total gauge of 0.65 mils of which 0.48x10⁻² mm (0.18 mils) was polyvinylidene chloride.

The oxygen permeation data is summarized on the Table below with O₂TR being the oxygen transmission rate.

**TABLE**

| | | Gauge. mm x10² (mils) | O₂TR (0% RH) | O₂TR (100% RH) |
|---|---|---|---|---|
| Ex. | Oriented nylon/EVOH | 1.35/0.38 (0.53/0.15) | 0.07 | 0.29 |
| Comp. 1 | (Amorphous nylon)/PVDC | 1.70/0.46 (0.67/0.18) | 0.42 | 2.11 |
| Comp. 2 | (Oriented nylon)/PVDC | 1.19/0.46 (0.47/0.18) | 0.48 | 1.04 |

## Claims

1. Use as an oxygen barrier of an expanded film laminate comprising a polyamide layer and a layer of ethylene vinyl alcohol copolymer characterised in that the laminate is expanded to an area of up to 4 times the original area, by monoaxially drawing it to a draw ratio of from 1.5:1 to 4:1.

2. A use according to claim 1 characterised in that the ethylene vinyl alcohol layer is adjacent to the polyamide layer.

3. A use according to claim 1 or claim 2 characterised in that the polyamide is polyepsiloncaprolactam.

4. A use according to claim 1 characterised in that a layer comprising a blend of the polyamide and the ethylene vinyl alcohol copolymer is interposed between the layer of ethylene vinyl alcohol copolymer and the layer of polyamide.

5. A use according to any one of claims 1 to 4 charcaterised in that the laminate is a coextruded laminate.

6. A use according to any one of claims 1 to 5 characterised in that the film laminate is embossed.

## Patentansprüche

1. Verwendung eines expandierten Laminatfiims enthaltend eine Polyamidschicht und eine Schicht eines Ethylenvinylalkoholcopolymeren, als Sauerstoffbarriere, dadurch gekennzeichnet, dass das Laminat bis zum Vierfachen der Fläche der Ausgangsfläche durch monoaxiales Ziehen auf ein Ziehverhältnis von 1,5:1 bis 4:1 in wenigstens einer Richtung gedehnt ist.

2. Verwendung nach Anspruch 1, dadurch gekennzeichnet, dass die Ethylenvinylalkoholschicht der Polyamidschicht anliegt.

3. Verwendung nach Anspruch 1 oder nach Anspruch 2, dadurh gekennzeichnet, dass das Polyamid poly-ε-caprolactam ist.

4. Verwendung nach Anspruch 1, dadurch gekennzeichnet, dass eine Schicht einer Mischung des Polyamids und des Ethylenvinylalkoholcopolymeren zwischen der Schicht des Ethylenvinylalkohlcopolymeren und der Schicht des Polyamids angeordnet ist.

5. Verwendung nach einem der Ansprüche 1 bis 4, dadurch gekennzeichnet, dass das Laminat ein coextrudiertes Laminat ist.

6. Verwendung nach einem der Ansprüche 1 bis 5, dadurch gekennzeichnet, dass der Laminatfilm getrieben ist.

## Revendications

1. Utilisation en tant que barrière à l'oxygène d'un film stratifié agrandi comprenant une couche de polyamide et une couche de copolymère éthylène-alcool vinylique, caractérisé en ce que l'on agrandit le stratifié de manière à ce qu'il présente une surface pouvant représenter jusqu'à 4 fois sa surface d'origine, en l'étirant mono-axialement avec un rapport d'étirage de 1,5:1 à 4:1.

2. Utilisation selon la revendication 1, caractérisée en ce que la couche éthylène-alcool vinylique est adjacente à la couche de polyamide.

3. Utilisation selon la revendication 1 ou 2, caractérisée en ce que le polyamide est du polyepsiloncaprolactame.

4. Utilisation selon la revendication 1, caractérisée en ce que l'on interpose une couche comprenant un mélange du polyamide et du copolymère éthylène-alcool vinylique entre la couche de copolymère éthylène-alcool vinylique et la couche de polyamide.

5. Utilisation selon l'une quelconque des revendications 1 à 4, caractérisée en ce que le stratifié est un stratifié co-extrudé.

6. Utilisation selon l'une quelconque des revendications 1 à 5, caractérisée en ce que l'on gaufre le film stratifié.
